# EUROPEAN PATENT APPLICATION

(11) **EP 4 668 711 A1**
(43) Date of publication of application: **24.12.2025**
(21) Application number: 24756010.5
(22) Date of filing: 01.02.2024
(51) Int. Cl.: H04L 65/1066

(54) **SESSION INFORMATION DISPLAY METHOD AND APPARATUS, ELECTRONIC DEVICE, AND STORAGE MEDIUM**

(30) Priority: 15.02.2023 CN 202310163339
(71) Applicant: Beijing Zitiao Network Technology Co., Ltd., Beijing 100190 (CN)
(72) Inventor: WANG, Hanqing, Beijing 100028 (CN); JIN, Xiaoshu, Beijing 100028 (CN); FAN, Danxue, Beijing 100028 (CN); FU, Haoxiang, Beijing 100028 (CN); ZHANG, Wenshu, Beijing 100028 (CN)
(74) Representative: Isarpatent
(86) International application number: PCT/CN2024/075227
(87) International publication number: WO 2024/169636

(57) **Abstract**

Embodiments of the present disclosure provide a session information display method and apparatus, an electronic device, and a storage medium. The method comprises: displaying a session interface, wherein at least one piece of session information is displayed in the session interface; and in response to a style adjustment operation of a first user, determining, from the at least one piece of session information, at least one piece of first session information to be adjusted, and adjusting a display style of the at least one piece of first session information in the session interface, wherein second session information other than the at least one piece of first session information is further displayed in the session interface.

## Description

### CROSS-REFERENCE TO RELATED APPLICATIONS

The present application is based on and claims priority to CN Application No. 202310163339.2, filed on February 15, 2023, which is incorporated herein by reference in its entirety.

### TECHNICAL FIELD

Embodiments of the disclosure relate to the field of computer technologies, and in particular, to a chat information display method and apparatus, an electronic device, and a storage medium.

### BACKGROUND

In the related arts, a user can send text chat information on a chat interface or view text chat information sent by other users on a chat interface. The text chat information is displayed in a single display style.

### SUMMARY

According to a first aspect, some embodiments of the disclosure provide a chat information display method, including:
displaying a chat interface, where the chat interface displays at least one piece of chat information; and
determining, in response to a style adjustment operation of a first user, at least one piece of first chat information to be adjusted from the at least one piece of chat information, and adjusting a display style of the at least one piece of first chat information on the chat interface, where the chat interface displays second chat information in addition to the at least one piece of first chat information.

According to a second aspect, some embodiments of the disclosure further provide a chat information display apparatus, including:
an interface display module configured to display a chat interface, where the chat interface displays at least one piece of chat information; and
a style adjustment module configured to determine, in response to a style adjustment operation of a first user, at least one piece of first chat information to be adjusted from the at least one piece of chat information, and adjust a display style of the at least one piece of first chat information on the chat interface, where the chat interface displays second chat information in addition to the at least one piece of first chat information.

According to a third aspect, some embodiments of the disclosure further provide an electronic device, including:
one or more processors; and
a memory configured to store one or more programs, where
the one or more programs, when executed by the one or more processors, cause the one or more processors to implement the chat information display method according to the embodiments of the disclosure.

According to a fourth aspect, some embodiments of the disclosure further provide a computer-readable storage medium having stored thereon a computer program that, when executed by a processor, causes the chat information display method according to the embodiments of the disclosure to be implemented.

According to a fifth aspect, some embodiments of the disclosure further provide a computer program, including instructions that, when executed by a processor, cause the processor to perform the chat information display method according to the embodiments of the disclosure.

### BRIEF DESCRIPTION OF THE DRAWINGS

The foregoing and other features, advantages, and aspects of embodiments of the disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale.
FIG. 1 is a schematic flowchart of a chat information display method according to some embodiments of the disclosure;
FIG. 2 is a schematic diagram of display of a chat interface according to some embodiments of the disclosure;
FIG. 3 is a schematic flowchart of another chat information display method according to some embodiments of the disclosure;
FIG. 4 is a schematic diagram of a display style of chat information according to some embodiments of the disclosure;
FIG. 5 is a schematic diagram of another display style of chat information according to some embodiments of the disclosure;
FIG. 6 is a schematic diagram of still another display style of chat information according to some embodiments of the disclosure;
FIG. 7 is a schematic diagram of a fourth display style of chat information according to some embodiments of the disclosure;
FIG. 8 is a schematic diagram of a fifth display style of chat information according to some embodiments of the disclosure;
FIG. 9 is a schematic diagram of a sixth display style of chat information according to some embodiments of the disclosure;
FIG. 10 is a block diagram of a structure of a chat information display apparatus according to some embodiments of the disclosure; and
FIG. 11 is a schematic diagram of a structure of an electronic device according to some embodiments of the disclosure.

### DETAILED DESCRIPTION

The embodiments of the disclosure are described in more detail below with reference to the accompanying drawings. Although some embodiments of the disclosure are shown in the accompanying drawings, it should be understood that the disclosure may be implemented in various forms and should not be construed as being limited to the embodiments set forth herein. Rather, these embodiments are provided for a more thorough and complete understanding of the disclosure. It should be understood that the accompanying drawings and the embodiments of the disclosure are only for exemplary purposes, and are not intended to limit the scope of protection of the disclosure.

It should be understood that the various steps described in the method implementations of the disclosure may be performed in different orders, and/or performed in parallel. Furthermore, additional steps may be included and/or the execution of the illustrated steps may be omitted in the method implementations. The scope of the disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the disclosure are only used to distinguish different apparatuses, modules, or units, and are not used to limit the sequence of functions performed by these apparatuses, modules, or units or interdependence.

It should be noted that the modifiers "one" and "a plurality of" mentioned in the disclosure are illustrative and not restrictive, and those skilled in the art should understand that unless the context clearly indicates otherwise, the modifiers should be understood as "one or more".

The names of messages or information exchanged between a plurality of apparatuses in the implementations of the disclosure are used for illustrative purposes only, and are not used to limit the scope of these messages or information.

As previously mentioned, aiming at the technical problem that the display style of the text chat information is single, the embodiments of the disclosure provide a chat information display method and apparatus, an electronic device, and a storage medium to enrich the display style of the chat information.

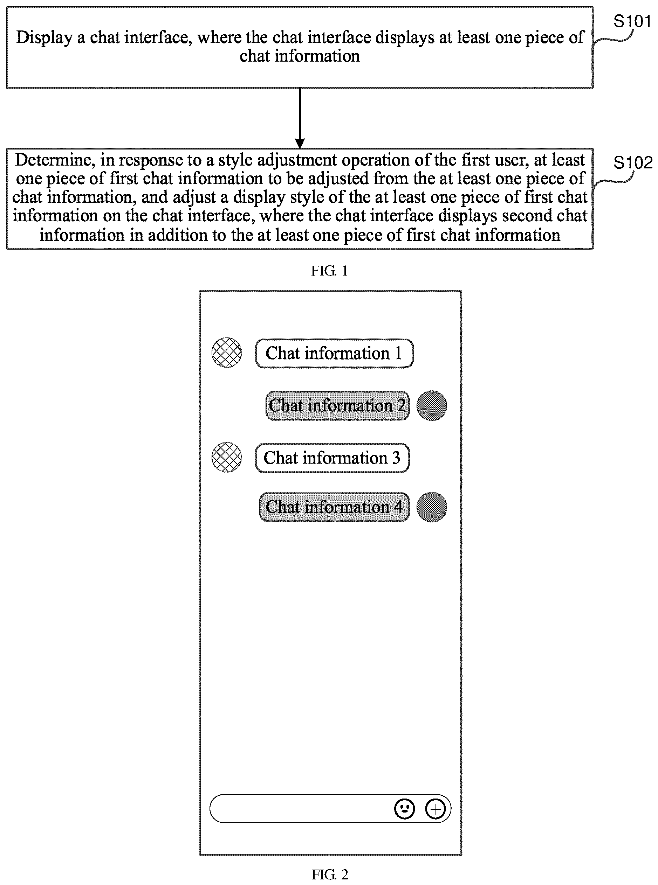

FIG. 1 is a schematic flowchart of a chat information display method according to some embodiments of the disclosure. The method may be performed by a chat information display apparatus, where the apparatus may be implemented by software and/or hardware, and may be configured in an electronic device, typically in a mobile phone or a tablet computer. The chat information display method provided in the embodiments of the disclosure is applicable to scenarios where a display style of chat information on a chat interface is adjusted. As shown in FIG. 1, the chat information display method provided in the embodiments may include the following steps.

S101: Display a chat interface, where the chat interface displays at least one piece of chat information.

For example, the chat interface may be understood as an interface for a first user to view chat information sent by other users and/or send chat information to other users. The chat interface may be a chat interface between the first user and another user, or a chat interface for a chat group in which the first user is located. In addition to the first user, the chat interface may further include at least one other user except the first user. The chat interface may display the at least one piece of chat information, and the at least one piece of chat information may include chat information sent by the first user and/or chat information received by the first user on the chat interface. The first user may be considered as a current user, such as a user currently viewing the chat interface.

For example, the chat interface may be displayed, and the at least one piece of chat information is displayed on the chat interface. For example, in response to receiving a display operation of the first user for a chat interface, the chat interface may be displayed, and at least some chat information sent on the chat interface by a user located in a chat corresponding to the chat interface is displayed on the chat interface, which is shown in FIG. 2.

S102: Determine, in response to a style adjustment operation of the first user, at least one piece of first chat information to be adjusted from the at least one piece of chat information, and adjust a display style of the at least one piece of first chat information on the chat interface, where the chat interface displays second chat information in addition to the at least one piece of first chat information.

According to the chat information display method and apparatus, the electronic device, and the storage medium provided in the embodiments of the disclosure, the chat interface is displayed, where the chat interface displays at least one piece of chat information; and in response to the style adjustment operation of the first user, the at least one piece of first chat information to be adjusted is determined from the at least one piece of chat information, and the display style of the at least one piece of first chat information on the chat interface is adjusted on the chat interface, where the chat interface displays second chat information in addition to the at least one piece of first chat information. The embodiments of the disclosure, by using the above technical solution, allows for targeted adjustment of the display style of some chat information on the chat interface in the information dimension, without the need to adjust the display style of all chat information sent by a user on a chat interface or within a current application as a whole, thereby enriching the display style of the chat information.

The style adjustment operation may be a trigger operation for indicating adjustment of a display style of at least one piece of chat information displayed on the chat interface, such as a trigger operation for indicating adjustment of a chat box display style of chat information on the chat interface, a trigger operation for indicating adjustment of a display size of chat information on the chat interface, a trigger operation for indicating adjustment of an information display manner of chat information on the chat interface, a trigger operation for indicating cancellation of display of chat information in a chat box, a trigger operation for indicating intertwined display of at least two pieces of chat information, and/or a trigger operation for indicating adjustment of annotation marks for chat information displayed on a chat interface.

The at least one piece of first chat information may be understood as chat information on the chat interface that corresponds to a currently received style adjustment operation, i.e., chat information whose display style is instructed to be adjusted by the style adjustment operation. The at least one piece of first chat information may include chat information sent by the first user and/or chat information sent by other users except the first user. Description is made below by taking the at least one piece of first chat information including the chat information sent by the first user as an example.

The second chat information may be other chat information displayed on the chat interface, except the at least one piece of first chat information. For example, the second chat information includes target chat information, and the target chat information and the at least one piece of first chat information are different chat information sent by the same user. For example, the target chat information may be understood as other chat information, on a chat interface, sent by a user who sends the at least one piece of first chat information, except the at least one piece of first chat information.

For example, in response to receiving the style adjustment operation of the first user, at least one piece of first chat information corresponding to the style adjustment operation may be determined from at least one piece of chat information currently displayed on the chat interface, and a display style of the at least one piece of first chat information may be adjusted on the chat interface, such as switching the at least one piece of first chat information from an original display style before receiving the style adjustment operation to a target display style corresponding to the style adjustment operation. For example, the target display style may be considered as a display style to which the style adjustment operation instructs the at least one piece of first chat information should be adjusted, and when the received style adjustment operations are different, the target display styles may also be different.

In some embodiments, the display style of some chat information on the chat interface may be adjusted in a targeted manner in the information dimension, without the need to adjust the display style of all chat information sent by a user on a chat interface or within a current application in the user dimension as a whole, so that some chat information and other chat information sent by the user can be displayed in different display styles on the chat interface, thereby enriching the display style of the chat information.

It should be noted that the display style, after the adjustment, of the at least one piece of first chat information may be visible only to the first user, or may be visible to at least two users located in the chat corresponding to the chat interface. Preferably, the display style after the adjustment may be visible to at least two users in the chat corresponding to the chat interface, so that at least one other user in the chat can see the adjusted display style of the at least one piece of first chat information on the at least one other user's client, thereby further enriching the interactivity between different users.

In a case that the display style of the at least one piece of first chat information is adjusted, the display style of the second chat information may be further adjusted, such as adjusting a display style of at least one piece of first chat information and second chat information currently displayed on the chat interface based on a style adjustment operation of the first user, and control the display style of chat information not currently displayed on the chat interface (i.e., chat information that is in the chat and that is not currently displayed in a display area of the chat interface) remains unchanged on the chat interface. Alternatively, the display style of the second chat information on the chat interface may be controlled to remain unchanged, such as adjusting the display style of some chat information sent by the first user on the chat interface based on the style adjustment operation of the first user, and keeping the display style of some other chat information sent by the first user on the chat interface unchanged. For example, this may be set as needed.

In some embodiments, after the display style of the at least one piece of first chat information on the chat interface is adjusted based on the style adjustment operation of the first user, the display of the at least one piece of first chat information in the target display style after the adjustment may be continuously maintained subsequently, until a style adjustment operation for the at least one piece of first chat information is received again. Alternatively, the at least one piece of first chat information is restored to the original display style before switching to satisfy the need to restore the at least one piece of first chat information to the original display style in response to a preset condition being met. In this case, for example, after the adjusting the display style of the at least one piece of first chat information on the chat interface, the method further includes: restoring the display style of the at least one piece of first chat information from a target display style after the adjustment to an original display style before the adjustment in response to a current condition meeting a preset condition. For example, the preset condition may be understood as a condition of switching the at least one piece of first chat information from the target display style after the adjustment to the original display style before the adjustment. The preset condition may be set as needed.

For example, the preset condition includes at least one of the following: duration of displaying the at least one piece of first chat information in the target display style reaching preset duration; a first style restoration operation of the first user for the at least one piece of first chat information being received; or a style restoration instruction for the at least one piece of first chat information being received, where the style restoration instruction is generated based on a second style restoration operation of a second user for the at least one piece of first chat information, and the first user and the second user are different users in a chat corresponding to the chat interface.

For example, the preset duration may be set as needed, and a specific value of the preset duration is not limited in the embodiments. The first style restoration operation may be understood as a style restoration operation performed by the first user for the at least one piece of first chat information, such as a trigger operation for a display restoration control displayed on the chat interface. The second style restoration operation may be understood as a style restoration operation performed by the second user for the at least one piece of first chat information. The style restoration operation may be configured to instruct the restoration of corresponding chat information (e.g., the at least one piece of first chat information) to the original display style before the adjustment, such as a trigger operation for a style restoration control, or a preset gesture operation. The style restoration instruction may be an instruction configured to instruct the restoration of the at least one piece of first chat information to the original display style before the adjustment, and the style restoration instruction may be generated based on the second style restoration operation of the second user. The first user and the second user are different users in the chat corresponding to the chat interface, i.e., different users participating in the chat.

For example, after the at least one piece of first chat information is adjusted from the original display style to the target display style, the duration of displaying the at least one piece of first chat information in the target display style may be timed. Alternatively, a countdown is performed with the preset duration as the starting point of countdown. In response to the display duration of the at least one piece of first chat information reaching the preset duration, the at least one piece of first chat information is restored from the target display style to the original display style before the adjustment.

For another example, after the at least one piece of first chat information is adjusted from the original display style to the target display style, the style restoration control may be displayed on the chat interface, such as displaying the style restoration control at a position associated with the at least one piece of first chat information. Alternatively, the style restoration control is displayed on the chat interface based on the corresponding trigger operation of the first user. Thus, in response to receiving the style restoration operation of the first user for the at least one piece of first chat information, such as in response to detecting that the first user triggers the style restoration control that is displayed on the chat interface and that corresponds to the at least one piece of first chat information, the at least one piece of first chat information may be restored from the target display style to the original display style before the adjustment.

For another example, after the at least one piece of first chat information in a chat is adjusted to the target display style based on a style adjustment operation of a first user in the chat, user clients of at least some second users in the chat may display the style restoration control on the chat interface of the chat displayed by themselves or display the style restoration control based on a corresponding trigger operation of the second user. In response to detecting that the second user triggers the style restoration control, the at least one piece of first chat information displayed by themselves is restored from the target display style to the original display style before the adjustment, and a style restoration instruction is generated, so as to instruct, through the style restoration instruction or a server, the user clients of other users in the chat (including the first user) to restore the display style of the at least one piece of first chat information displayed by themselves to the original display style before the adjustment.

For example, assuming that a user a (i.e., the first user) adjusts at least one piece of first chat information in a chat to a target display style by performing a style adjustment operation at a client A, any second user in the chat or a second user (e.g., a user b) that is in the chat and that is associated with the at least one piece of first chat information may restore the display style of the at least one piece of first chat information to the original display style by performing a style restoration operation at a client B installed on themselves, to prompt the user a that they see the at least one piece of first chat information, thereby further enriching the interaction between the first user and the second user.

In addition, the client B may further generate a style restoration instruction in response to detecting that the second user is performing a style restoration operation, and send the style restoration instruction to clients of other users, in the chat, except the second user through the server, so as to instruct the clients of other users to restore the display style of the at least one piece of first chat information displayed by themselves to the original display style.

In some implementations, for the case that the preset condition includes the duration of displaying the at least one piece of first chat information in the target display style reaching the preset duration, after adjusting, on the chat interface, the display style of the at least one piece of first chat information on the chat interface, a preset identifier may also be further displayed, where the preset identifier indicates the duration for which the at least one piece of first chat information is displayed in the target display style, and/or the preset identifier indicates remaining duration for which the at least one piece of first chat information is displayed in the target display style, allowing the user to know the duration, thereby further enriching the display content of the chat interface. In this case, for example, the preset condition includes the duration of displaying the at least one piece of first chat information in the target display style reaching the preset duration, and after adjusting the display style of the at least one piece of first chat information on the chat interface, the method further includes: displaying a preset identifier, where the preset identifier is configured to indicate at least one of current display duration or remaining display duration of the at least one piece of first chat information displayed in the target display style. For example, the preset identifier may be, for example, a timing identifier or a countdown identifier, etc., and may be displayed in a preset position of the chat interface or in a position associated with at least one piece of first chat information, which is not limited in the embodiments.

According to the chat information display method provided in this embodiment, the chat interface is displayed, where the chat interface displays at least one piece of chat information; and in response to the style adjustment operation of the first user, the at least one piece of first chat information to be adjusted is determined from the at least one piece of chat information, and the display style of the at least one piece of first chat information on the chat interface is adjusted on the chat interface, where the chat interface displays second chat information in addition to the at least one piece of first chat information. This embodiment, by using the above technical solution, allows for targeted adjustment of the display style of some chat information on the chat interface in the information dimension, without the need to adjust the display style of all chat information sent by a user on a chat interface or within a current application as a whole, thereby enriching the display style of the chat information.

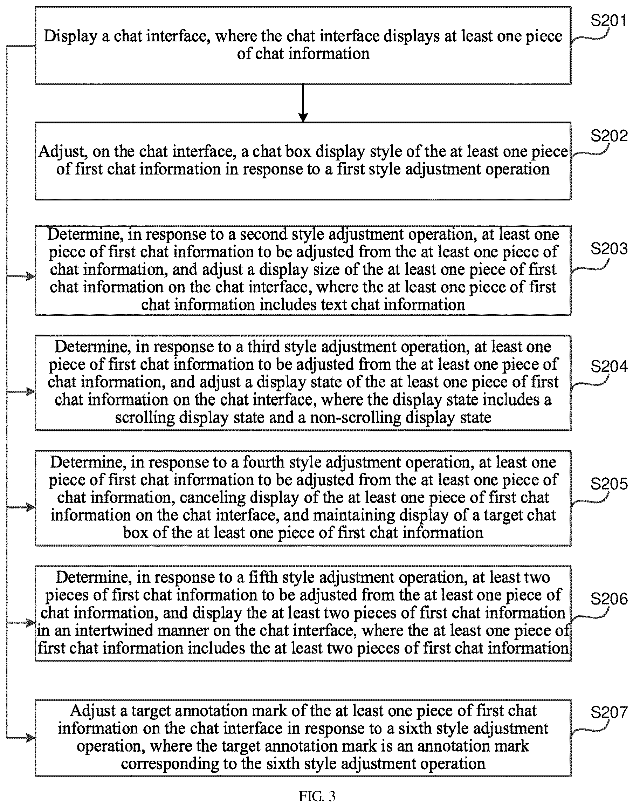

FIG. 3 is a schematic flowchart of another chat information display method according to some embodiments of the disclosure. The solution in the embodiments may be combined with one or more optional solutions in the above embodiments. For example, the determining, in response to a style adjustment operation, at least one piece of first chat information to be adjusted from the at least one piece of chat information, and adjusting a display style of the at least one piece of first chat information on the chat interface includes at least one of the following: adjusting, on the chat interface, a chat box display style of the at least one piece of first chat information in response to a first style adjustment operation; determining, in response to a second style adjustment operation, at least one piece of first chat information to be adjusted from the at least one piece of chat information, and adjusting a display size of the at least one piece of first chat information on the chat interface, where the at least one piece of first chat information includes text chat information; determining, in response to a third style adjustment operation, at least one piece of first chat information to be adjusted from the at least one piece of chat information, and adjusting a display state of the at least one piece of first chat information on the chat interface, where the display state includes a scrolling display state and a non-scrolling display state; determining, in response to a fourth style adjustment operation, at least one piece of first chat information to be adjusted from the at least one piece of chat information, canceling display of the at least one piece of first chat information on the chat interface, and maintaining display of a target chat box of the at least one piece of first chat information; determining on the chat interface, in response to a fifth style adjustment operation, at least two pieces of first chat information to be adjusted from the at least one piece of chat information, and displaying the at least two pieces of first chat information in an intertwined manner on the chat interface, where the at least one piece of first chat information includes the at least two pieces of first chat information; or adjusting a target annotation mark of the at least one piece of first chat information on the chat interface in response to a sixth style adjustment operation, where the target annotation mark is an annotation mark corresponding to the sixth style adjustment operation.

As shown in FIG. 3, the chat information display method provided in the embodiments may include the following steps.

S201: Display a chat interface, where the chat interface displays at least one piece of chat information, and at least one of S202 to S207 is performed.

S202: Adjust, on the chat interface, a chat box display style of the at least one piece of first chat information in response to a first style adjustment operation.

For example, the first style adjustment operation may be a trigger operation for instructing adjustment of a chat box display style of at least one piece of first chat information, such as an operation that triggers a style identifier corresponding to a chat box display style or a gesture operation for instructing adjustment of a chat box display style. In this case, the at least one piece of first chat information may be chat information corresponding to the first style adjustment operation on the chat interface. The chat box display style may be understood as a display style of a chat box, such as a display style of a chat bubble in which the at least one piece of first chat information is displayed. The display style may, for example, include a shape, background color, texture, display dynamic effects, etc. of the corresponding chat box. The shape of the chat box may include, for example, square, heart, or other regular or irregular shapes, etc.

In some embodiments, the chat box display style of at least some chat information sent by one or more users in a chat may be adjusted on the chat interface of the chat. For example, the first user may adjust the chat box display style of some chat information that the first user sends in a chat on a chat interface of the chat.

For example, upon receiving a first style adjustment operation for a piece of chat information displayed on the chat interface, a chat box display style of the piece of chat information may be adjusted to a target chat box display style corresponding to the first style adjustment operation in response to the first style adjustment operation. Alternatively, upon receiving a first style adjustment operation, a chat box display style of selected chat information on the chat interface may be adjusted to a target chat box display style corresponding to the first style adjustment operation.

In some implementations, a style list of chat box display styles may be displayed for the first user to perform the first style adjustment operation. In this case, for example, before the adjusting, on the chat interface, a chat box display style of the at least one piece of first chat information in response to a first style adjustment operation, the method further includes: determining, in response to a first trigger operation acting on the chat interface, at least one piece of first chat information to be adjusted from the at least one piece of chat information, and displaying the style list, where the style list displays a style identifier corresponding to at least one candidate chat box display style, and the style identifier is configured to trigger performing of the first style adjustment operation.

For example, the first trigger operation may be an operation that triggers one or more pieces of chat information displayed on the chat interface, such as a long-press operation on chat information displayed on the chat interface. The style list may be a list for displaying style identifiers of at least some candidate chat box display styles in the current application, and the list may display the style identifier corresponding to at least one candidate chat box display style.

For example, in response to receiving a first trigger operation for chat information (i.e., the at least one piece of first chat information) displayed on the chat interface, the style list may be displayed. In response to detecting that the first user triggers a style identifier in the style list, a candidate chat box display style corresponding to the style identifier may be used as the target chat box display style, and the chat box display style of the at least one piece of first chat information may be switched to the target chat box display style.

In some implementations, it is also possible not to display a style list of chat box display styles. In response to receiving a first style adjustment operation for chat information (i.e., the at least one piece of first chat information), a current chat box display style of the at least one piece of first chat information may be switched according to a preset order of the candidate chat box display styles.

S203: Determine, in response to a second style adjustment operation, at least one piece of first chat information to be adjusted from the at least one piece of chat information, and adjust a display size of the at least one piece of first chat information on the chat interface, where the at least one piece of first chat information includes text chat information.

For example, the second style adjustment operation may be a trigger operation for instructing adjustment of the display size of the at least one piece of first chat information on the chat interface, such as a multi-finger zoom-in operation or a multi-finger zoom-out operation for the at least one piece of chat information displayed on the chat interface, etc. Accordingly, the display size of the at least one piece of first chat information on the chat interface may be increased or decreased based on the second style adjustment operation. Description is made below by taking increasing the display size of the at least one piece of first chat information as an example. In this case, the at least one piece of first chat information may be chat information corresponding to the second style adjustment operation on the chat interface. The at least one piece of first chat information may include text chat information, such as chat information including text, except sharing information for sharing media content. The at least one piece of first chat information may or may not contain an emoji image.

In some embodiments, the display size of one or more pieces of text chat information displayed on the chat interface may be adjusted on the chat interface. For example, the first user may adjust the display size of chat information that the first user sends on a chat interface of a chat, such as increasing the display size of chat information that the first user sends to prompt other users or associated users in the chat to view the chat information.

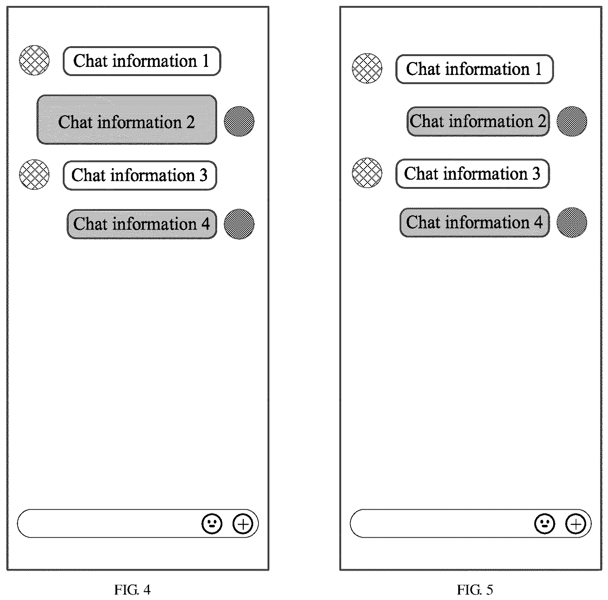

For example, in response to receiving a second style adjustment operation for a piece of chat information displayed on a chat interface, such as in response to a two-finger zoom-in operation acting in a display area of a piece of chat information being detected, it can be determined that the second style adjustment operation is received, the chat information is used as the at least one piece of first chat information to be adjusted, and in response to the second style adjustment operation, the display size of the at least one piece of first chat information on the chat interface is increased, as shown in FIG. 4 (the figure takes increasing the display size of chat information 2 as an example).

It can be understood that in response to the display size of the at least one piece of first chat information on the chat interface being adjusted, it is possible to adjust only the display size (such as the font size) of the at least one piece of first chat information, without adjusting the display size of a chat box of the at least one piece of first chat information. Alternatively, it is also possible to adjust the display size of the at least one piece of first chat information and the display size of a chat box of the at least one piece of first chat information simultaneously (as shown in FIG. 4). For the case of adjusting the display size of the at least one piece of first chat information and the display size of the chat box of the at least one piece of first chat information, in a case where the display size of the chat box of the at least one piece of first chat information is adjusted, it is possible not to adjust display positions of other chat information displayed on the chat interface, and reduce a height of a blank area between a chat box of the at least one piece of first chat information and its adjacent chat boxes. Alternatively, it is also possible to adjust display positions of other chat information displayed on the chat interface, such as maintaining a height of a blank area between the chat information unchanged, and control other chat information located above the at least one piece of first chat information to move up and/or control other chat information located below the at least one piece of first chat information to move down, etc.

S204: Determine, in response to a third style adjustment operation, at least one piece of first chat information to be adjusted from the at least one piece of chat information, and adjust a display state of the at least one piece of first chat information on the chat interface, where the display state includes a scrolling display state and a non-scrolling display state.

For example, the third style adjustment operation may be a trigger operation for instructing adjustment of the display state of the at least one piece of chat information on the chat interface, such as a first preset swipe operation that acts on the at least one piece of chat information on the chat interface, etc. For example, the display state may include a scrolling display state and a non-scrolling display state, and the third style adjustment operation may be a trigger operation for adjusting the at least one piece of first chat information from the non-scrolling display state to the scrolling display state, and/or, a trigger operation for adjusting the at least one piece of first chat information from the scrolling display state to the non-scrolling display state, etc. Description is made below by taking the third style adjustment operation being configured to instruct adjustment of the at least one piece of first chat information from the non-scrolling display state to the scrolling display state as an example. In this case, the at least one piece of first chat information may be chat information corresponding to the third style adjustment operation on the chat interface. The scrolling display state may be a state in which the at least one piece of first chat information is displayed in a scrolling manner in the form of a marquee in its chat box. The non-scrolling display state may be a state in which the at least one piece of first chat information is not displayed in a scrolling manner in its chat box, such as a state in which characters in the at least one piece of first chat information are displayed in a static manner in its chat box.

In some embodiments, a user may adjust the at least one piece of chat information displayed on the chat interface from the non-scrolling display state to the scrolling display state.

For example, in response to receiving a third style adjustment operation for a piece of chat information displayed on the chat interface, at least one piece of first chat information instructed by the third style adjustment operation to be adjusted can be determined, and the at least one piece of first chat information is displayed in a scrolling manner in a chat box of the first chat information. That is, the at least one piece of first chat information is adjusted from the non-scrolling display state to the scrolling display state, as shown in FIG. 5 (the figure takes adjusting the chat information 2 to the scrolling display state as an example).

For example, in response to detecting that the first user swipes in a chat box of a piece of chat information in a first preset direction, the chat information may be controlled to move in its chat box in a second preset direction, or control the chat information to move in its chat box in a direction corresponding to the first preset direction to display the chat information in a scrolling manner.

For example, both the first preset direction and the second preset direction may be flexibly set as needed. For example, the first preset direction and the second preset direction may be set as right. Accordingly, the third style adjustment operation may be an operation of swiping right in the chat box of the at least one piece of first chat information. In this case, the at least one piece of first chat information may be controlled to move right in its chat box. A speed at which the at least one piece of first chat information moves in its chat box may be preset or determined based on the user's interaction speed, which is not limited in the embodiments.

S205: Determine, in response to a fourth style adjustment operation, at least one piece of first chat information to be adjusted from the at least one piece of chat information, canceling display of the at least one piece of first chat information on the chat interface, and maintaining display of a target chat box of the at least one piece of first chat information on the chat interface.

For example, the fourth style adjustment operation may be a trigger operation for instructing to cancel the display of information content of the at least one piece of chat information and to maintain the display of the chat box of the at least one piece of first chat information, such as a second preset swipe operation acting on the at least one piece of chat information, etc. In this case, the at least one piece of first chat information may be chat information corresponding to the fourth style adjustment operation on the chat interface. For example, the fourth style adjustment operation may be a left swipe operation that acts on the at least one piece of chat information on the chat interface. The target chat box may be understood as a chat box of the at least one piece of first chat information.

For example, in response to receiving a fourth style adjustment operation for chat information (i.e., the at least one piece of first chat information) displayed on the chat interface, such as in response to detecting that the first user swipes left in a chat box of chat information, the chat information may be used as the at least one piece of first chat information, the display of the at least one piece of first chat information is canceled, and the display of the target chat box of the at least one piece of first chat information is maintained.

The manner in which the display of the at least one piece of first chat information is canceled is not limited in the embodiments. For example, it is possible to directly cancel display of information content of the at least one piece of first chat information in the target chat box. Alternatively, it is also possible to hide the at least one piece of first chat information, such as by adjusting transparency of the at least one piece of first chat information, controlling the target chat box to be rolled up or flipped with a surface on which the at least one piece of first chat information is displayed as an inner surface, etc.

In some implementations, the at least one piece of first chat information displayed in the target chat box may be hidden by controlling the target chat box to be rolled up or by flipping the target chat box. In this case, for example, the canceling display of the at least one piece of first chat information on the chat interface, and maintaining display of a target chat box of the at least one piece of first chat information includes: controlling the target chat box of the at least one piece of first chat information to be rolled up from one end of the target chat box to the opposite end of the target chat box; or, flipping the target chat box of the at least one piece of first chat information.

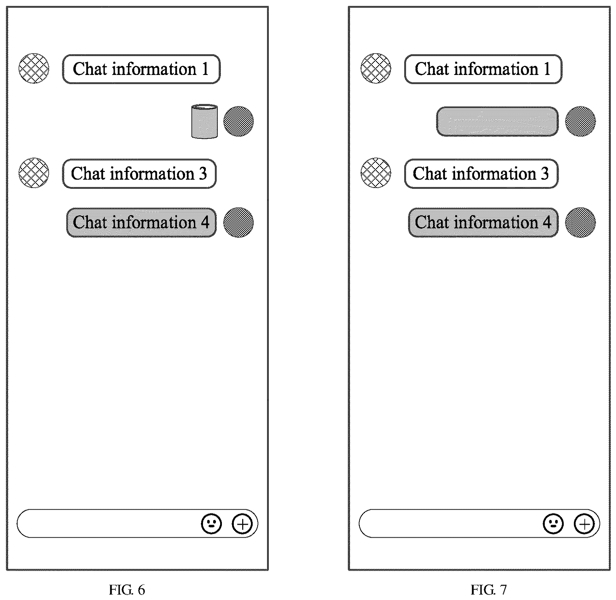

For example, as shown in FIG. 6 (the figure takes controlling a chat box of the chat information 2 to be rolled up as an example), in response to receiving a fourth style adjustment operation, a target chat box of the at least one piece of first chat information may be controlled to be rolled up, so that the target chat box appears cylindrical or scroll-like. For example, the target chat box of the at least one piece of first chat information may be controlled to be rolled up from one end to the other end in a preset rolling direction, such as controlling the target chat box of the at least one piece of first chat information to be rolled up from left to right, from right to left, from top to bottom, or from bottom to top. Alternatively, the target chat box of the at least one piece of first chat information is controlled to be rolled up from an end away from its sending user's avatar to an end close to its sending user's avatar.

For another example, as shown in FIG. 7 (the figure takes controlling the chat box of the chat information 2 to be rolled up as an example), in response to receiving a fourth style adjustment operation, the target chat box of the at least one piece of first chat information may be controlled to rotate 180° around a centerline of the target chat box, to flip the target chat box.

S206: Determine, in response to a fifth style adjustment operation, at least two pieces of first chat information to be adjusted from the at least one piece of chat information, and display the at least two pieces of first chat information in an intertwined manner on the chat interface, where the at least one piece of first chat information includes the at least two pieces of first chat information.

For example, the fifth style adjustment operation may be a trigger operation for instructing intertwined display of the at least two pieces of chat information on the chat interface, such as a multi-finger pinch operation acting on the at least two pieces of chat information on the chat interface, etc. The fifth style adjustment operation is a trigger operation different from the trigger operation for instructing the decrease of the display size of the at least one piece of first chat information. In this case, the at least one piece of first chat information may be the at least two pieces of chat information corresponding to the fifth style adjustment operation on the chat interface. In response to the fifth style adjustment operation being a two-finger pinch operation, the at least two pieces of chat information may be chat information located between two touch points of the two-finger pinch operation on the chat interface. For example, the at least two pieces of chat information may be consecutive pieces of chat information on the chat interface, such as two adjacent pieces of chat information on the chat interface. For example, the two pieces of chat information may include chat information sent by at least two users.

In some embodiments, the at least two pieces of chat information on the chat interface may be displayed in an intertwined manner, thereby further enriching the display style of the chat information.

For example, in response to receiving a fifth style adjustment operation for at least two pieces of first chat information on the chat interface, the at least two pieces of chat information may be used as the at least one piece of first chat information, and the at least two pieces of first chat information are switched from independent tiled display (as shown in FIG. 2) to intertwined display, such as controlling chat boxes of the two pieces of first chat information to be intertwined, as shown in FIG. 5 (the figure takes intertwined display of the chat information 2 and chat information 3 as an example and does not show information content of the chat information 2 and the chat information 3). For example, an intertwined structure formed by intertwining the at least two pieces of chat information may be controlled or not controlled to rotate after the intertwining is completed. For example, this may be set as needed.

S207: Adjust a target annotation mark of the at least one piece of first chat information on the chat interface in response to a sixth style adjustment operation, where the target annotation mark is an annotation mark corresponding to the sixth style adjustment operation.

For example, the sixth style adjustment operation may be a trigger operation for instructing adjustment of an annotation mark of the at least one piece of first chat information, such as a trigger operation for instructing to add a new annotation mark to the at least one piece of first chat information, a trigger operation for instructing to delete at least one annotation mark of the at least one piece of first chat information, or a trigger operation for instructing modification of at least one annotation mark of the at least one piece of first chat information, etc. For example, the sixth style adjustment operation may be an operation that triggers an annotation completion control after the annotation mark adjustment is completed, etc. In this case, the first chat information may be chat information corresponding to the sixth style adjustment operation on the chat interface. The target annotation mark may be an annotation mark corresponding to the sixth style adjustment operation, such as an annotation mark that is instructed by the sixth style adjustment operation to be added, deleted, or modified. The annotation mark may be understood as a mark for annotation, such as an underscore, a strikethrough, or a selection mark.

In some embodiments, the user may be allowed to annotate the chat information displayed on the chat interface in order for other users in the chat to view.

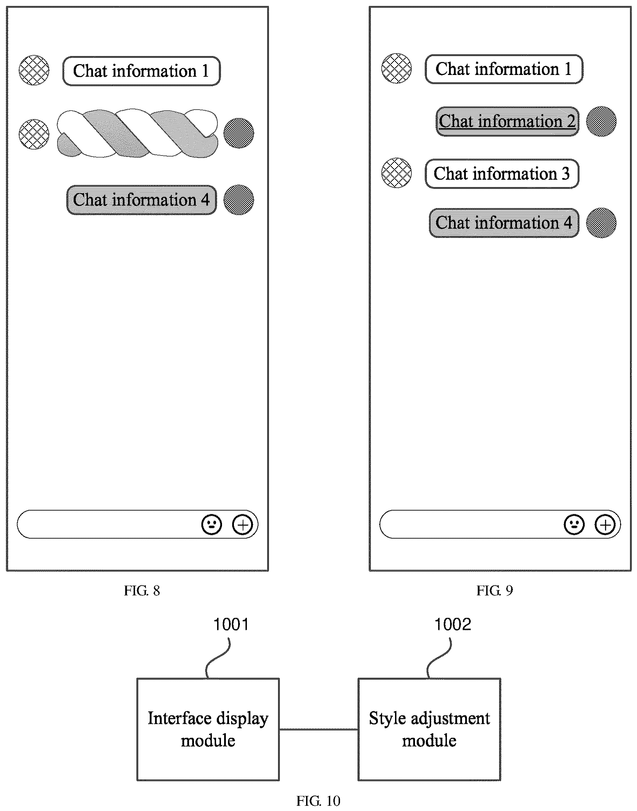

For example, upon receiving a sixth style adjustment operation for chat information (i.e., the at least one piece of first chat information) on the chat interface is received, an annotation mark in the at least one piece of first chat information may be adjusted in response to the sixth adjustment operation, such as adding a new annotation mark to the at least one piece of first chat information (as shown in FIG. 9, which takes the chat information 2 being an underline as an example), deleting an annotation mark added to the at least one piece of first chat information, or modifying an annotation mark added to the at least one piece of first chat information, etc.

In some implementations, in response to a corresponding trigger operation (e.g., a second trigger operation) of the first user, chat information corresponding to the trigger operation may be switched from a non-annotation state to an annotation state, in order for the first user to annotate the chat information; and upon receiving the sixth style adjustment operation, such as in response to detecting that the first user triggers the annotation completion control, chat information with annotation marks adjusted by the first user may be displayed in an original display position of the chat information on the chat interface, or, chat information annotated with marks by the first user may be sent on the chat interface, etc. In this case, for example, before the adjusting a target annotation mark of the at least one piece of first chat information on the chat interface in response to a sixth style adjustment operation, the method further includes: determining, in response to the second trigger operation acting on the chat interface, at least one piece of first chat information to be adjusted from the at least one piece of chat information, and switching the at least one piece of first chat information from the non-annotation state to the annotation state, where the annotation state allows the first user to annotate the at least one piece of first chat information. For example, the second trigger operation may be a trigger operation configured to instruct switching of chat information on the chat interface from the non-annotation state to the annotation state, such as a trigger operation that triggers an annotation control corresponding to the chat information.

The chat information display method provided in the embodiments can enrich the display style of the chat information, thereby enriching the interaction between different users in the chat, and enhancing the user's chat experience.

FIG. 10 is a block diagram of a structure of a chat information display apparatus according to some embodiments of the disclosure. The apparatus may be implemented by software and/or hardware, and may be configured in an electronic device, typically in a mobile phone or a tablet computer. A display style of chat information on a chat interface may be adjusted by performing the chat information display method. As shown in FIG. 10, the chat information display apparatus provided in this embodiment may include an interface display module 1001 and a style adjustment module 1002, where
the interface display module 1001 is configured to display a chat interface, where the chat interface displays at least one piece of chat information; and
the style adjustment module 1002 is configured to determine, in response to a style adjustment operation of a first user, at least one piece of first chat information to be adjusted from the at least one piece of chat information, and adjust a display style of the at least one piece of first chat information on the chat interface, where the chat interface displays second chat information in addition to the at least one piece of first chat information.

According to the chat information display apparatus provided in this embodiment, the chat interface is displayed through the interface display module, where the chat interface displays the at least one piece of chat information; and in response to the style adjustment operation of the first user, the at least one piece of first chat information to be adjusted is determined from the at least one piece of chat information, and the display style of the at least one piece of first chat information on the chat interface is adjusted on the chat interface through the style adjustment module, where the chat interface displays the second chat information in addition to the at least one piece of first chat information. This embodiment, by using the above technical solution, allows for targeted adjustment of the display style of some chat information on the chat interface in the information dimension, without the need to adjust the display style of all chat information sent by a user on a chat interface or within a current application as a whole, thereby enriching the display style of the chat information.

In the above solution, the style adjustment module 1002 may include at least one of the following: a first adjustment unit configured to adjust, on the chat interface, a chat box display style of the at least one piece of first chat information in response to a first style adjustment operation; a second adjustment unit configured to determine, in response to a second style adjustment operation, at least one piece of first chat information to be adjusted from the at least one piece of chat information, and adjust a display size of the at least one piece of first chat information on the chat interface, where the at least one piece of first chat information includes text chat information; a third adjustment unit configured to determine, in response to a third style adjustment operation, at least one piece of first chat information to be adjusted from the at least one piece of chat information, and adjust a display state of the at least one piece of first chat information on the chat interface, where the display state includes a scrolling display state and a non-scrolling display state; a fourth adjustment unit configured to determine, in response to a fourth style adjustment operation, at least one piece of first chat information to be adjusted from the at least one piece of chat information, cancel display of the at least one piece of first chat information on the chat interface, and maintain display of a target chat box of the at least one piece of first chat information; a fifth adjustment unit configured to determine, in response to a fifth style adjustment operation, at least two pieces of first chat information to be adjusted from the at least one piece of chat information, and display the at least two pieces of first chat information in an intertwined manner on the chat interface, where the at least one piece of first chat information includes the at least two pieces of first chat information; or a sixth adjustment unit configured to adjust a target annotation mark of the at least one piece of first chat information on the chat interface in response to a sixth style adjustment operation, where the target annotation mark is an annotation mark corresponding to the sixth style adjustment operation.

In some embodiments, the chat information display apparatus may further include: a list display module configured to, before the adjusting, on the chat interface, a chat box display style of the at least one piece of first chat information in response to a first style adjustment operation, determine, in response to a first trigger operation acting on the chat interface, at least one piece of first chat information to be adjusted from the at least one piece of chat information, and display a style list, where the style list displays a style identifier corresponding to at least one candidate chat box display style, and the style identifier is configured to trigger performing of the first style adjustment operation.

In the above solution, the fourth adjustment unit may be configured to: control the target chat box of the at least one piece of first chat information to be rolled up from one end of the target chat box to the opposite end of the target chat box; or, flip the target chat box of the at least one piece of first chat information.

In some embodiments, the chat information display apparatus may further include: a state switching module configured to, before the adjusting a target annotation mark of the at least one piece of first chat information on the chat interface in response to a sixth style adjustment operation, determine, in response to a second trigger operation acting on the chat interface, at least one piece of first chat information to be adjusted from the at least one piece of chat information, and switch the at least one piece of first chat information from a non-annotation state to an annotation state, where the annotation state allows the first user to annotate the at least one piece of first chat information.

In some embodiments, the chat information display apparatus may further include: a style restoration module configured to, after the adjusting a display style of the at least one piece of first chat information on the chat interface, restore the display style of the at least one piece of first chat information from a target display style after the adjustment to an original display style before the adjustment when a current condition meets a preset condition.

In the above solution, the preset condition may include at least one of the following: duration of displaying the at least one piece of first chat information in the target display style reaching preset duration; a first style restoration operation of the first user for the at least one piece of first chat information being received; or a style restoration instruction for the at least one piece of first chat information being received, where the style restoration instruction is generated based on a second style restoration operation of a second user for the at least one piece of first chat information, and the first user and the second user are different users in a chat corresponding to the chat interface.

In the above solution, the preset condition includes duration of displaying the at least one piece of first chat information in the target display style reaching preset duration, the style adjustment module 1002 may further be configured to: after the adjusting a display style of the at least one piece of first chat information on the chat interface, display a preset identifier, where the preset identifier is configured to indicate at least one of current display duration or remaining display duration of the at least one piece of first chat information displayed in the target display style.

In the above solution, the second chat information may include target chat information, and the target chat information and the at least one piece of first chat information may be different chat information sent by the same user.

The chat information display apparatus according to this embodiment of the disclosure can perform the chat information display method according to any one of the embodiments of the disclosure, and has corresponding functional modules and beneficial effects for performing the chat information display method. For the technical details not described in detail in this embodiment, reference may be made to the chat information display method provided in any embodiment of the disclosure.

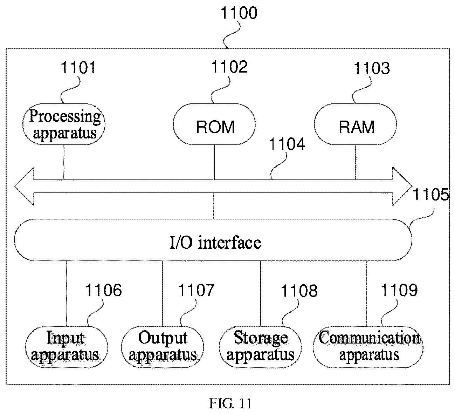

Reference is made to FIG. 11 below, which is a schematic diagram of a structure of an electronic device (e.g., a terminal device) 1100 suitable for implementing the embodiments of the disclosure. A terminal device in this embodiment of the disclosure may include, but is not limited to, mobile terminals such as a mobile phone, a notebook computer, a digital broadcast receiver, a personal digital assistant (PDA), a tablet computer (PAD), a portable media player (PMP), and a vehicle-mounted terminal (e.g., a vehicle navigation terminal), and fixed terminals such as a digital TV and a desktop computer. The electronic device shown in FIG. 11 is merely an example, and shall not impose any limitation on the function and scope of use of the embodiments of the disclosure.

As shown in FIG. 11, the electronic device 1100 may include a processing apparatus (e.g., a central processing unit or a graphics processing unit) 1101 that may perform a variety of appropriate actions and processing in accordance with a program stored in a read-only memory (ROM) 1102 or a program loaded from a storage apparatus 1108 into a random access memory (RAM) 1103. The RAM 1103 further stores various programs and data required for the operation of the electronic device 1100. The processing apparatus 1101, the ROM 1102, and the RAM 1103 are connected to one another through a bus 1104. An input/output (I/O) interface 1105 is also connected to the bus 1104.

Generally, the following apparatuses may be connected to the I/O interface 1105: an input apparatus 1106 including, for example, a touchscreen, a touchpad, a keyboard, a mouse, a camera, a microphone, an accelerometer, and a gyroscope; an output apparatus 1107 including, for example, a liquid crystal display (LCD), a speaker, and a vibrator; the storage apparatus 1108 including, for example, a tape and a hard disk; and a communication apparatus 1109. The communication apparatus 1109 may allow the electronic device 1100 to perform wireless or wired communication with other devices to exchange data. Although FIG. 11 shows the electronic device 1100 having various apparatuses, it should be understood that it is not required to implement or have all of the shown apparatuses. It may be an alternative to implement or have more or fewer apparatuses.

In particular, according to some embodiments of the disclosure, the process described above with reference to the flowchart may be implemented as a computer software program. For example, this embodiment of the disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 1109, installed from the storage apparatus 1108, or installed from the ROM 1102. When the computer program is executed by the processing apparatus 1101, the above-mentioned functions defined in the method of the embodiment of the disclosure are performed.

It should be noted that the above computer-readable medium described in the disclosure may be a computer-readable signal medium, a computer-readable storage medium, or any combination thereof. The computer-readable storage medium may be, for example but not limited to, electric, magnetic, optical, electromagnetic, infrared, or semiconductor systems, apparatuses, or devices, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM) (or a flash memory), an optical fiber, a portable compact disc read-only memory (CD-ROM), an optical storage device, a magnetic storage device, or any suitable combination thereof. In the disclosure, the computer-readable storage medium may be any tangible medium containing or storing a program which may be used by or in combination with an instruction execution system, apparatus, or device. In the disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may further be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

In some implementations, a client and a server may communicate using any currently known or future-developed network protocol such as the Hypertext Transfer Protocol (HTTP), and may be connected to digital data communication (for example, a communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to: display a chat interface, where the chat interface displays at least one piece of chat information; and determine, in response to a style adjustment operation of a first user, at least one piece of first chat information to be adjusted from the at least one piece of chat information, and adjust a display style of the at least one piece of first chat information on the chat interface, where the chat interface displays second chat information in addition to the at least one piece of first chat information.

Computer program code for performing operations of the disclosure can be written in one or more programming languages or a combination thereof, where the programming languages include but are not limited to object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user through any kind of network, including a local area network (LAN) or a wide area network (WAN), or may be connected to an external computer (for example, connected through the Internet with the aid of an Internet service provider).

The flowchart and block diagram in the accompanying drawings illustrate the possibly implemented architecture, functions, and operations of the system, method, and computer program product according to various embodiments of the disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the disclosure may be implemented by software, or may be implemented by hardware. The name of a module does not constitute a limitation on the unit itself in some cases.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC), a complex programmable logic device (CPLD), and the like.

In the context of the disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM) (or a flash memory), an optic fiber, a portable compact disc read-only memory (CD-ROM), an optical storage device, a magnetic storage device, or any suitable combination thereof.

According to one or more embodiments of the disclosure, Example 1 provides a chat information display method, including:
displaying a chat interface, where the chat interface displays at least one piece of chat information; and
determining, in response to a style adjustment operation of a first user, at least one piece of first chat information to be adjusted from the at least one piece of chat information, and adjusting a display style of the at least one piece of first chat information on the chat interface, where the chat interface displays second chat information in addition to the at least one piece of first chat information.

According to one or more embodiments of the disclosure, Example 2 is the method according to Example 1, the determining, in response to a style adjustment operation, at least one piece of first chat information to be adjusted from the at least one piece of chat information, and adjusting a display style of the at least one piece of first chat information on the chat interface includes at least one of the following:
adjusting, on the chat interface, a chat box display style of the at least one piece of first chat information in response to a first style adjustment operation;
determining, in response to a second style adjustment operation, at least one piece of first chat information to be adjusted from the at least one piece of chat information, and adjusting a display size of the at least one piece of first chat information on the chat interface, where the at least one piece of first chat information includes text chat information;
determining, in response to a third style adjustment operation, at least one piece of first chat information to be adjusted from the at least one piece of chat information, and adjusting a display state of the at least one piece of first chat information on the chat interface, where the display state includes a scrolling display state and a non-scrolling display state;
determining, in response to a fourth style adjustment operation, at least one piece of first chat information to be adjusted from the at least one piece of chat information, canceling display of the at least one piece of first chat information on the chat interface, and maintaining display of a target chat box of the at least one piece of first chat information;
determining, in response to a fifth style adjustment operation, at least two pieces of first chat information to be adjusted from the at least one piece of chat information, and displaying the at least two pieces of first chat information in an intertwined manner on the chat interface, where the at least one piece of first chat information includes the at least two pieces of first chat information; or
adjusting a target annotation mark of the at least one piece of first chat information on the chat interface in response to a sixth style adjustment operation, where the target annotation mark is an annotation mark corresponding to the sixth style adjustment operation.

According to one or more embodiments of the disclosure, Example 3 is the method according to Example 2, before the adjusting, on the chat interface, a chat box display style of the at least one piece of first chat information in response to a first style adjustment operation, the method further includes:
determining, in response to a first trigger operation acting on the chat interface, at least one piece of first chat information to be adjusted from the at least one piece of chat information, and displaying a style list, where the style list displays a style identifier corresponding to at least one candidate chat box display style, and the style identifier is configured to trigger performing of the first style adjustment operation.

According to one or more embodiments of the disclosure, Example 4 is the method according to Example 2, the canceling display of the at least one piece of first chat information on the chat interface, and maintaining display of a target chat box of the at least one piece of first chat information includes:
controlling the target chat box of the at least one piece of first chat information to be rolled up from one end of the target chat box to the opposite end of the target chat box; or
flipping the target chat box of the at least one piece of first chat information.

According to one or more embodiments of the disclosure, Example 5 is the method according to Example 2, before the adjusting a target annotation mark of the at least one piece of first chat information on the chat interface in response to a sixth style adjustment operation, the method includes:
determining, in response to a second trigger operation acting on the chat interface, at least one piece of first chat information to be adjusted from the at least one piece of chat information, and switching the at least one piece of first chat information from a non-annotation state to an annotation state, where the annotation state allows the first user to annotate the at least one piece of first chat information.

According to one or more embodiments of the disclosure, Example 6 is the method according to any one of Examples 1 to 5, after the adjusting a display style of the at least one piece of first chat information on the chat interface, the method further includes:
restoring the display style of the at least one piece of first chat information from a target display style after the adjustment to an original display style before the adjustment when a current condition meets a preset condition.

According to one or more embodiments of the disclosure, Example 7 is the method according to Example 6, the preset condition includes at least one of the following:
duration of displaying the at least one piece of first chat information in the target display style reaching preset duration;
a first style restoration operation of the first user for the at least one piece of first chat information being received; or
a style restoration instruction for the at least one piece of first chat information being received, where the style restoration instruction is generated based on a second style restoration operation of a second user for the at least one piece of first chat information, and the first user and the second user are different users in a chat corresponding to the chat interface.

According to one or more embodiments of the disclosure, Example 8 is the method according to Example 7, the preset condition includes duration of displaying the at least one piece of first chat information in the target display style reaching preset duration, and after the adjusting a display style of the at least one piece of first chat information on the chat interface, the method further includes:
displaying a preset identifier, where the preset identifier is configured to indicate at least one of current display duration or remaining display duration of the at least one piece of first chat information displayed in the target display style.

According to one or more embodiments of the disclosure, Example 9 is the method according to any one of Examples 1-5, the second chat information includes target chat information, and the target chat information and the at least one piece of first chat information are different chat information sent by the same user.

According to one or more embodiments of the disclosure, Example 10 provides a chat information display apparatus, including:
an interface display module configured to display a chat interface, where the chat interface displays at least one piece of chat information; and
a style adjustment module configured to determine, in response to a style adjustment operation of a first user, at least one piece of first chat information to be adjusted from the at least one piece of chat information, and adjust a display style of the at least one piece of first chat information on the chat interface, where the chat interface displays second chat information in addition to the at least one piece of first chat information.

According to one or more embodiments of the disclosure, Example 11 provides an electronic device, including:
one or more processors; and
a memory configured to store one or more programs, where
the one or more programs, when executed by the one or more processors, cause the one or more processors to implement the chat information display method according to any one of Examples 1 to 9.

According to one or more embodiments of the disclosure, Example 12 provides a computer-readable storage medium having stored thereon a computer program, where the computer program, when executed by a processor, causes the chat information display method according to any one of Examples 1 to 9 to be implemented.

According to one or more embodiments of the disclosure, Example 13 provides a computer program, including: instructions that, when executed by a processor, cause the processor to perform the chat information display method according to any one of Examples 1 to 9.

The foregoing descriptions are merely preferred embodiments of the disclosure and explanations of the applied technical principles. Those skilled in the art should understand that the scope of disclosure involved in the disclosure is not limited to the technical solutions formed by specific combinations of the foregoing technical features, and shall also cover other technical solutions formed by any combination of the foregoing technical features or equivalent features thereof without departing from the foregoing concept of disclosure. For example, a technical solution formed by a replacement of the foregoing features with technical features with similar functions disclosed in the disclosure (but not limited thereto) also falls within the scope of the disclosure.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the disclosure. Some features that are described in the context of separate embodiments can also be implemented in combination in a single embodiment. In contrast, various features described in the context of a single embodiment may alternatively be implemented in a plurality of embodiments individually or in any suitable subcombination.

Although the subject matter has been described in a language specific to structural features and/or logical actions of the method, it should be understood that the subject matter defined in the appended claims is not necessarily limited to the specific features or actions described above. In contrast, the specific features and actions described above are merely exemplary forms of implementing the claims.

## Claims

1. A chat information display method, comprising:
displaying a chat interface, wherein the chat interface displays at least one piece of chat information; and
determining, in response to a style adjustment operation of a first user, at least one piece of first chat information to be adjusted from the at least one piece of chat information, and adjusting a display style of the at least one piece of first chat information on the chat interface, wherein the chat interface displays second chat information in addition to the at least one piece of first chat information.

2. The display method according to claim 1, wherein the determining, in response to the style adjustment operation, the at least one piece of first chat information to be adjusted from the at least one piece of chat information, and adjusting the display style of the at least one piece of first chat information on the chat interface comprises at least one of the following:
adjusting, on the chat interface, a chat box display style of the at least one piece of first chat information in response to a first style adjustment operation;
determining, in response to a second style adjustment operation, the at least one piece of first chat information to be adjusted from the at least one piece of chat information, and adjusting a display size of the at least one piece of first chat information on the chat interface, wherein the at least one piece of first chat information comprises text chat information;
determining, in response to a third style adjustment operation, the at least one piece of first chat information to be adjusted from the at least one piece of chat information, and adjusting a display state of the at least one piece of first chat information on the chat interface, wherein the display state comprises a scrolling display state and a non-scrolling display state;
determining, in response to a fourth style adjustment operation, the at least one piece of first chat information to be adjusted from the at least one piece of chat information, canceling a display of the at least one piece of first chat information on the chat interface, and maintaining a display of a target chat box of the at least one piece of first chat information on the chat interface;
determining, in response to a fifth style adjustment operation, at least two pieces of first chat information to be adjusted from the at least one piece of chat information, and displaying the at least two pieces of first chat information in an intertwined manner on the chat interface, wherein the at least one piece of first chat information comprises the at least two pieces of first chat information; or
adjusting a target annotation mark of the at least one piece of first chat information on the chat interface in response to a sixth style adjustment operation, wherein the target annotation mark is an annotation mark corresponding to the sixth style adjustment operation.

3. The display method according to claim 2, before the adjusting, on the chat interface, the chat box display style of the at least one piece of first chat information in response to the first style adjustment operation, the display method, further comprising:
determining, in response to a first trigger operation acting on the chat interface, at least one piece of first chat information to be adjusted from the at least one piece of chat information, and displaying a style list, wherein the style list displays a style identifier corresponding to at least one candidate chat box display style, and the style identifier is configured to trigger a performing of the first style adjustment operation.

4. The display method according to claim 2, wherein the canceling the display of the at least one piece of first chat information on the chat interface, and maintaining the display of the target chat box of the at least one piece of first chat information comprises:
controlling the target chat box of the at least one piece of first chat information to be rolled up from one end of the target chat box to an opposite end of the target chat box; or
flipping the target chat box of the at least one piece of first chat information.

5. The display method according to claim 2, before the adjusting the target annotation mark of the at least one piece of first chat information on the chat interface in response to the sixth style adjustment operation, further comprising:
determining, in response to a second trigger operation acting on the chat interface, the at least one piece of first chat information to be adjusted from the at least one piece of chat information, and switching the at least one piece of first chat information from a non-annotation state to an annotation state, wherein the annotation state allows the first user to annotate the at least one piece of first chat information.

6. The display method according to any one of claims 1 to 5, after the adjusting the display style of the at least one piece of first chat information on the chat interface, further comprising:
restoring the display style of the at least one piece of first chat information from a target display style after an adjustment to an original display style before the adjustment in response to a current condition meeting a preset condition.

7. The display method according to claim 6, wherein the preset condition comprises at least one of the following:
duration of displaying the at least one piece of first chat information in the target display style reaching preset duration;
a first style restoration operation of the first user for the at least one piece of first chat information being received; or
a style restoration instruction for the at least one piece of first chat information being received, wherein the style restoration instruction is generated based on a second style restoration operation of a second user for the at least one piece of first chat information, and the first user and the second user are different users in a chat corresponding to the chat interface.

8. The display method according to claim 7, wherein the preset condition comprises the duration of displaying the at least one piece of first chat information in the target display style reaching the preset duration, and
after the adjusting the display style of the at least one piece of first chat information on the chat interface, the display method further comprises:
displaying a preset identifier, wherein the preset identifier is configured to indicate at least one of current display duration or remaining display duration of the at least one piece of first chat information displayed in the target display style.

9. The display method according to any one of claims 1 to 8, wherein the second chat information comprises target chat information, and the target chat information and the at least one piece of first chat information are different chat information sent by a same user.

10. A chat information display apparatus, comprising:
an interface display module configured to display a chat interface, wherein the chat interface displays at least one piece of chat information; and
a style adjustment module configured to determine, in response to a style adjustment operation of a first user, at least one piece of first chat information to be adjusted from the at least one piece of chat information, and adjust a display style of the at least one piece of first chat information on the chat interface, wherein the chat interface displays second chat information in addition to the at least one piece of first chat information.

11. An electronic device, comprising:
at least one processor; and
a memory communicatively connected to the at least one processor, wherein
the memory stores a computer program executable by the at least one processor, and the computer program, when executed by the at least one processor, causes the at least one processor to perform a chat information display method according to any one of claims 1 to 9.

12. A computer-readable storage medium storing computer instructions that, when executed by a processor, cause a chat information display method according to any one of claims 1 to 9 to be implemented.

13. A computer program, comprising
instructions that, when executed by a processor, cause the processor to perform the chat information display method according to any one of claims 1 to 9.
